(19) Europäisches Patentamt
European Patent Office
Office européen des brevets

(11) **EP 1 685 375 B1**

(12) **EUROPÄISCHE PATENTSCHRIFT**

(45) Veröffentlichungstag und Bekanntmachung des Hinweises auf die Patenterteilung:
**06.04.2011 Patentblatt 2011/14**

(21) Anmeldenummer: **04791087.2**

(22) Anmeldetag: **30.10.2004**

(51) Int Cl.:
***G01M 3/20*** (2006.01)

(86) Internationale Anmeldenummer:
**PCT/EP2004/012334**

(87) Internationale Veröffentlichungsnummer:
**WO 2005/047844 (26.05.2005 Gazette 2005/21)**

(54) **VERFAHREN ZUM BETRIEB EINES WASSERSTOFF-TESTLECKS**

METHOD FOR OPERATING A HYDROGEN TEST LEAK UNIT

PROCEDE D'OPERATION D'UNE UNITE DE DETECTION DE FUITE D'HYDROGENE

(84) Benannte Vertragsstaaten:
**CH DE FR GB IT LI**

(30) Priorität: **13.11.2003 DE 10353033**

(43) Veröffentlichungstag der Anmeldung:
**02.08.2006 Patentblatt 2006/31**

(73) Patentinhaber: **Inficon GmbH**
**50968 Köln (DE)**

(72) Erfinder: **HILGERS, Heike**
**51427 Bergisch Gladbach (DE)**

(74) Vertreter: **von Kreisler Selting Werner**
**Deichmannhaus am Dom**
**Bahnhofsvorplatz 1**
**50667 Köln (DE)**

(56) Entgegenhaltungen:
**EP-A- 0 395 965    EP-A- 0 503 925**
**WO-A-02/47189    DE-A1- 10 122 733**

## Beschreibung

Die Erfindung betrifft ein Verfahren zum Betrieb eines Waserstoff-Testlecks, das eine durch eine Membran begrenzte Kammer aufweist, in welche ein Prüfgasgemisch aus Wasserstoff und mindestens einem Beimischungsgas eingeführt wird.

Testlecks werden benutzt, um Leckstrommessgeräte zu kalibrieren. Ein Testleck weist einen Behälter auf, in dem ein Volumen eines Prüfgases oder Prüfgasgemisches unter geregeltem Druck gehalten wird. Die Kammer enthält einen Ausgang, der an eine Kapillare oder ein anderes definiertes Testleck, das ins Freie führt, angeschlossen ist. Zur Druckregelung weist die Kammer eine Membran auf, die mit einer Feder abgestützt ist und bei Auslenkung ein Regelventil betätigt, welches eine das Gas liefernde Druckquelle ein- und ausschaltet.

Wasserstoff darf aufgrund seiner Explosivität nicht als reines Gas in Testlecks eingesetzt werden. Daher wird üblicherweise ein sauerstofffreies Wasserstoff-/Stickstoffgemisch als Prüfgasgemisch (Formiergas) verwendet. Nun ist die Membran, die die Kammer des Druckregelventils abschließt, nicht gasundurchlässig. Vielmehr hat sie für verschiedene Gase unterschiedliche Permeabilitäten. Dies hat zur Folge, dass der Wasserstoff schneller aus der Kammer entweicht als der Stickstoff, so dass die Stickstoffkonzentration in der Kammer zunimmt. Üblicherweise besteht das Prüfgasgemisch aus 95 % $N_2$ und 5 % $H_2$. Der Wasserstoffanteil kann bis zu 10 % betragen. Darüber besteht Explosionsgefahr.

Der Erfindung liegt die Aufgabe zugrunde, ein Verfahren zum Betrieb eines Wasserstoff-Testlecks anzugeben, das eine hohe zeitliche Konstanz der Leckrate aufweist.

Das erfindungsgemäße Verfahren ist durch den Patentanspruch 1 definiert. Erfindungsgemäß wird als Beimischungsgas ein Gas gewählt, das in Bezug auf das Material der Membran einen Permeationskoeffizienten hat, der zwischen 50 % und 200 % desjenigen von Wasserstoff liegt.

Die Erfindung geht von dem Gedanken aus, dass zur Vermeidung einer Entmischung durch Permeation die Komponenten des Prüfgasgemisches annähernd gleiche Permeationskoeffizienten in Bezug auf das Membranmaterial haben sollte. Die Permeationskoeffizienten hängen weitgehend, jedoch nicht ausschließlich, von der Molekülgröße ab. Das Wasserstoffmolekül ist relativ klein und hat im Allgemeinen relativ hohe Permeationskoeffizienten. Entsprechendes gilt auch für Helium. Andererseits hat sich ergeben, dass auch relativ große Moleküle, wie beispielsweise $CO_2$, $CH_4$ oder $C_2H_6$ eine hohe Permeation aufweisen können.

Als Beimischungsgas für Wasserstoff hat sich Helium als besonders geeignet erwiesen. In Versuchen hat sich gezeigt, dass die Permeation durch eine Membran im Wesentlich gleich schnell für Wasserstoff und Helium verläuft. Ein Vorteil dieser Kombination besteht darin, dass man den Wasserstoffanteil auf etwa 5 % reduzieren kann. Dies ist im Hinblick auf Gefahrgutklassen von Bedeutung. Eine weitere Randbedingung besteht darin, dass die Lebensdauer des Testlecks bei einem Jahr liegen sollte. Bisher war ein Wasserstoffänteil von 5 % nicht möglich, da durch die notwendige Bypasskapillare zu viel Gas ausgestoßen wurde und die Lebensdauer nicht eingehalten werden konnte.

Als Beimischungsgas geeignet sind Helium (He), Kohlendioxid ($CO_2$), Methan ($CH_4$) und Aethan ($C_2H_6$). Diese Aufzählung ist jedoch nicht abschließend.

Das Beimischungsgas sollte sauerstofffrei sein, damit es nicht mit dem Wasserstoff ein explosionsfähiges Gemisch bildet. Dies ist allerdings keine notwendige Bedingung. Durch Verringerung des Wasserstoffanteils kann die Explosionsfähigkeit des Prüfgasgemisches verringert werden.

Im Folgenden wird unter Bezugnahme auf die Zeichnungen ein Ausführungsbeispiel der Erfindung näher erläutert.

Es zeigen:

Fig. 1   ein Funktionsschaubild des Wasserstoff-Testlecks, und

Fig. 2   eine prinzipielle konstruktive Ausgestaltung des Wasserstoff- Testlecks.

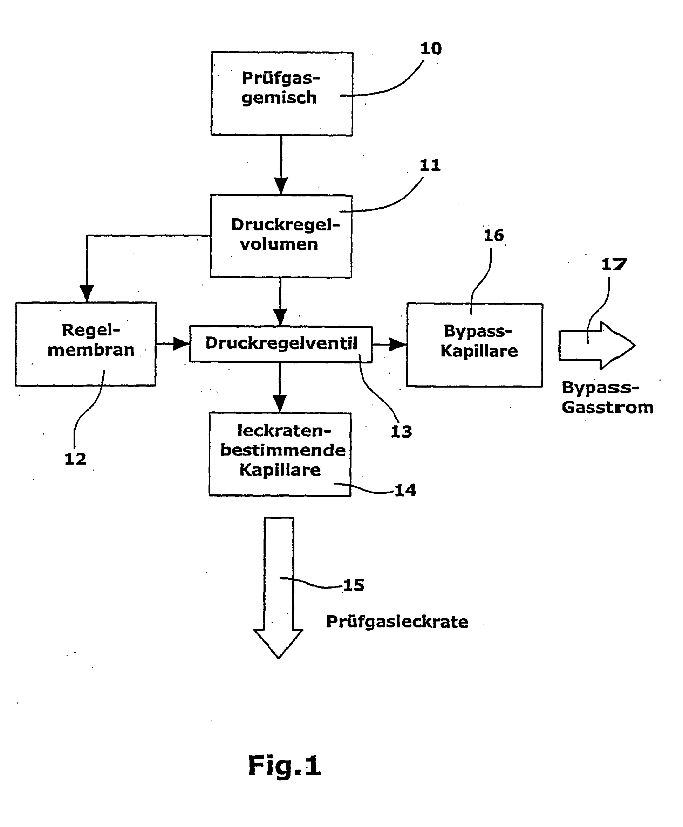

Gemäß Figur 1 wird ein Prüfgasgemisch 10 in ein Druckregelvolumen 11 eingeführt. Das Druckregelvolumen 11 weist ein Druckreduzierventil auf, welches mit einer Regelmembran 12 versehen ist. Ein Druckregelventil 13 regelt mit Hilfe der Regelmembran 12 den Druck im Druckregelvolumen 11 auf einen konstanten Wert. Das Druckregelventil ist mit einer leckratenbestimmenden Kapillare 14 verbunden, aus der der Leckstrom 15 mit der Prüfgasleckrate austritt.

Das Druckregelvolumen 11 bzw. das Druckregelventil 13 ist mit einer Bypasskapillare 16 verbunden, die einen Bypassstrom 17 ins Freie leitet, um eine ständige Durchströmung des Druckregelvolumens 11 zur Vermeidung von Entmischungen zu bewirken.

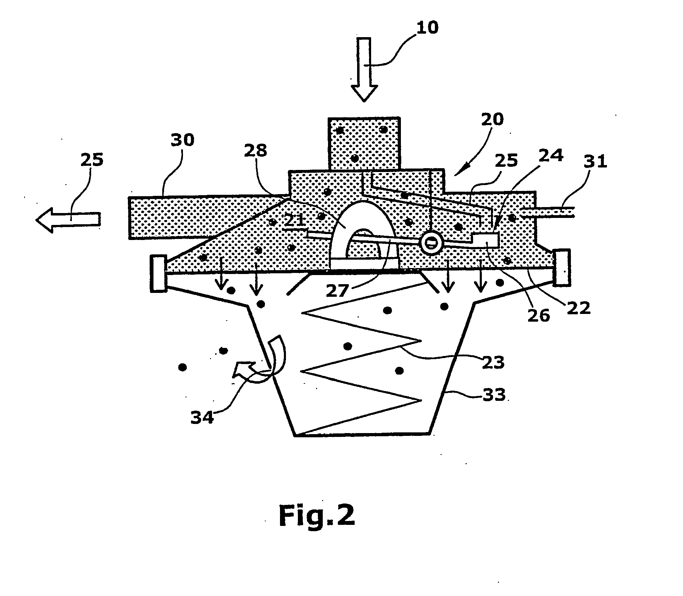

Figur 2 zeigt den Druckregler 20, dem das Prüfgasgemisch 10 zugeführt wird. Der Druckregler 20 enthält eine Kammer 21, in die das Prüfgasgemisch eingeführt wird. Diese Kammer ist mit einer Membran 22 verschlossen. Die Membran 22 besteht aus Elastomermaterial. Sie ist von einer Feder 23 abgestützt, die dem Druck in der Kammer 21 entgegenwirkt. Das Druckregelventil 24 weist eine Leitung 25 auf, mit der das unter hohem Druck stehende Prüfgasgemisch in die Kammer 21 eingeführt wird. Der Auslass der Leitung 25 wird von einem beweglichen Ventilorgan 26 geöffnet und geschlossen. Das Ventilorgan 26 ist über eine Stange 27, welche einen zweiarmigen Hebel bildet, mit einer Kopplungseinrichtung 28 verbunden, welche den einen Hebelarm mit der Membran 22 verbindet. Die Auslenkbewegungen der Membran 22 bewirken, dass das Druckregelventil 24 geöffnet oder geschlossen wird. Auf diese Weise wird ein der Kraft der Feder 23 entsprechender Druck in der Kammer 21 eingestellt und aufrechterhalten.

In Figur 2 ist ferner der Testleckausgang 30 dargestellt, der mit einer (nicht dargestellten) leckratenbestimmenden Kapillare verbunden ist, welche ins Freie führt.

Ferner ist an der Kammer 21 eine Bypasskapillare 31 vorgesehen, durch die ein Leckstrom ständig ins Freie geführt wird.

Der Raum unter der Membran 22 ist durch einen Behälter 33 begrenzt, der die Feder 23 abstützt und eine Entlüftungsöffnung 34 aufweist.

Die kleinen Punkte in Figur 2 repräsentieren das Mischgasvolumen und die dicken Punkte repräsentieren die Wasserstoffmoleküle. Die Wasserstoffmoleküle defundieren aus der Kammer 21 durch die Membran 22 und gelangen durch die Entlüftungsöffnung 34 auch ins Freie.

Die Membran 22 ist eine Polymermembran. Bei einem Ausführungsbeispiel besteht sie aus Polybutadiene-Co-Acrylonitrile (Perbunan 18). Bei einem anderen Ausführungsbeispiel besteht sie aus 73/27 Perbunan.

Die nachstehende Tabelle gibt den Permeationskoeffizient P für die genannten Membranwerkstoffe an. Der Permeationskoeffizient P hat in der nachfolgend zitierten Tabelle (aus Yasuda, H., Stannet, V.: Polymer Handbook, J. Wiley & Sons, New York 1975) die Dimension

$$[cm^3 \ (STP) \ cm \ cm^{-2} \ s^{-1} \ (cm \ Hg)^{-1}]$$

| Tabelle | | |
|---|---|---|
| Membranmaterial | | |
| Poly(butadiene-co-acrylonitrile) | 80/20 | $P \times 10^{10}$ |
| | He | 16,9 |
| | $H_2$ | 25,2 |
| | $N_2$ | 2,52 |
| | $O_2$ | 8,16 |
| | $CO_2$ | 63,1 |
| 73/27 (Perbunan) | | |
| | He | 12,2 |
| | $H_2$ | 15,9 |
| | $N_2$ | 1,06 |
| | $O_2$ | 3,85 |
| | $CO_2$ | 30,8 |
| | $C_2H_2$ | 24,9 |
| | $C_{3H8}$ | 77,7 |

Der Permeationskoeffizient P für Wasserstoff beträgt hier je nach Membranmaterial 25,2 oder 15,9. Das Beimischungsgas wird so gewählt, dass sein Permeationskoeffizient zwischen 50 und 200 % desjenigen von Wasserstoff liegt. Hierfür kommen auch noch andere Beimischungsgase in Betracht, die in der Tabelle nicht angegeben sind. Vorzugsweise liegt der genannte Bereich zwischen 50 % und 150 %.

**Patentansprüche**

1.  Verfahren zum Betrieb eines Wasserstoff-Testlecks, das eine durch eine Membran (22) begrenzte Kammer (21) aufweist, in welcher ein Prüfgasgemisch aus Wasserstoff und mindestens einem Beimischungsgas eingeführt wird, **dadurch gekennzeichnet,** **dass** das Beimischungsgas in Bezug auf das Material der Membran (22) einen Permeationskoeffizienten (P) hat, der zwischen 50 % und 200 % desjenigen von Wasserstoff liegt.

**2.** Verfahren nach Anspruch 1, **dadurch gekennzeichnet, dass** als Beimischungsgas Helium, Kohlendioxid oder Methan gewählt wird.

**3.** Verfahren nach Anspruch 1 oder 2, **dadurch gekennzeichnet, dass** das Beimischungsgas sauerstofffrei ist.

**4.** Verfahren nach einem der Ansprüche 1-3, **dadurch gekennzeichnet, dass** der Wasserstoffanteil des Prüfgasgemisches geringer ist als 10 %.

## Claims

**1.** A method for operating a hydrogen test leak unit comprising a chamber (21) delimited by a membrane (22), into which a tracer gas mixture of hydrogen and at least one added gas is introduced,
**characterized in that**
said added gas has a coefficient of permeation (P) with respect to the material of the membrane (22) that ranges between 50% and 200% of that of hydrogen.

**2.** The method according to claim 1, wherein at least one of the group comprising helium, carbon dioxide and methane is selected as the added gas.

**3.** The method according to claim 1 or 2, wherein the added gas is oxygen-free.

**4.** The method according to one of claims 1-3, wherein the hydrogen content of the tracer gas mixture is lower than 10%.

## Revendications

**1.** Procédé d'opération d'une unité de détection de fuite d'hydrogène comprenant une chambre (21) délimitée par une membrane (22), dans laquelle est introduite une mixture de gaz de test comprenant d'hydrogène et au moins un gaz de mélange,
**caractérisé en ce que**
le gaz de mélange a un coefficient de perméation (P) par rapport au matériau de la membrane (22), qui se situe entre 50% et 200% de celui de l'hydrogène.

**2.** Procédé selon la revendication 1, **caractérisé en ce que** l'on choisit l'hélium, le dioxyde de carbone ou le méthane comme ledit gaz de mélange.

**3.** Procédé selon les revendications 1 ou 2, **caractérisé en ce que** le gaz de mélange est dépourvu d'oxygène.

**4.** Procédé selon l'une quelconque des revendications 1 à 3, **caractérisé en ce que** le teneur en hydrogène dans la mixture de gaz de test est inférieur à 10%.

Fig.1

EP 1 685 375 B1

Fig.2

6

**IN DER BESCHREIBUNG AUFGEFÜHRTE DOKUMENTE**

**In der Beschreibung aufgeführte Nicht-Patentliteratur**

- **Yasuda, H. ; Stannet, V.** Polymer Handbook. J. Wiley & Sons, 1975